# EUROPEAN PATENT SPECIFICATION

(11) **EP 2 036 871 B1**
(45) Date of publication and mention of the grant of the patent: **01.12.2010**
(21) Application number: 08163931.2
(22) Date of filing: 09.09.2008
(51) Int. Cl.: C04B 41/71, E04C 2/06

(54) **Prefinished fibre reinforced cement articles**
Vorgefertigte faserverstärkte Zementartikel
Articles de ciment renforcé à fibre prédéfinie

(30) Priority: 10.09.2007 EP 07116041
(43) Date of publication of application: 18.03.2009
(73) Proprietor: Eternit AG, 69126 Heidelberg (DE); Redco NV, 1880 Kapelle-op-den-Bos (BE)
(72) Inventor: SCHMIDT, Gerhard, 76669 Bad Schönborn (DE); SCHNEIDER, Michaela, 68799 Reilingen (DE); KALBSKOPF, Reinhard, 3080 Tervuren (BE)
(74) Representative: Claeys, Pierre

(56) References cited:
- WO-A-2007/022449
- DD-A1- 135 188
- US-A1- 2005 072 056

## Description

The present invention relates to a process for manufacturing fibre reinforced cement articles comprising the steps of :
a) forming a fibre reinforced cement article from a slurry comprising water, cement and fibres,
b) air-curing said fibre reinforced cement article,
c) applying a water repellent composition on a front surface of said fibre reinforced cement article,
d) applying a translucent coating composition on said front surface of said fibre reinforced cement article, which is provided with said water repellent composition,
e) film forming and drying the translucent coating composition.

The present invention also relates to the use of fibre reinforced cement articles.

It is known that a disadvantageous property of cementitious products is the occurrence of efflorescence phenomena. These are attributable to the fact that hydrated or dissolved salts originating from the absorption of water, e.g. upon exposure to rain, are transported to the surface by the water which evaporates, resulting in white deposits of salts on the surface. Moreover, fibre reinforced articles become dark coloured upon water absorption, for instance during exposure to rain.

To avoid these inconveniences and for decorative purposes, fibre reinforced cement articles are frequently provided with a coloured coating on the front surface.

For some applications however, e.g. panels used for interior and exterior wall cladding, the fibre reinforced cement articles are provided with a translucent coating on the front surface, which still shows the typical texture of the fibres while protecting the front surface from the ingress of water. On the works site, these boards are cut to size and fixed, either with screws or rivets which are driven into predrilled holes. These cut edges and drilled holes allow the penetration of water, e.g. during exposure to rain, and in the case of translucent coated fibre reinforced articles give rise to the appearance of dark zones in these areas; in some cases, efflorescence phenomena can be observed in these areas as well.

To avoid water penetration via the unprotected cut edges, the fibre reinforced cement articles manufacturer recommends to treat these on the works site with a sealer or a water repellent agent. However, if this labour-intensive treatment is not or not carefully carried out (e.g. especially on the beveled corners of wall cladding panels), the aforementioned problems arise. Moreover, even when the edges are treated, the problem still persists around the predrilled fixation holes whose treatment with a sealer or a water repellent agent is laborious.

WO02/081399 describes a method of producing a water resistant fibre cement product whereby the water repelling agent is preferably sprayed on the fibre cement sheet during its formation; however this water repelling agent impairs cement hardening. Moreover, even by controlling the spray width, the off-cut from the width trimming operation comprises some water repellent agent which gives problems of recycling and effluent water treatment in e.g. the Hatschek manufacturing process.

WO99/28275 describes the treatment of fibre reinforced cement sheets with a silane which is applied on the green (i.e. unhardened) sheet saturated with water. However, as the pores of this green sheet are filled up with water, the silane does not penetrate deeply into the sheet, and the treatment is not efficient to avoid the appearance of dark zones around untreated edges and fixation holes.

None of the known processes allows to obtain a final product that resists to rain exposure without appearance of dark coloured zones and without requiring labour intensive treatment during installation.

To solve this problem, the invention provides a process, as mentioned before wherein step b) consists of an air-curing of said fibre reinforced cement article at a temperature from 45°C to 75°C during a time period from 5 to 10 hours and wherein said step c) is performed on the so obtained air-cured fibre reinforced cement article.

The known products, for example disclosed in WO02/081399, are not air-cured products but autoclaved products. Autoclaved products undergo also "carbonation", but which is in this case the attack of the crystalline calcium silicate hydrate such as 11 tobermorite by CO₂, and which gives rise to destruction of the crystalline structure through formation of a silica gel, and, unlike air-cured fibre reinforced cement products, to a strength reduction; moreover this gel loosens water, leading to shrinkage which is higher compared to air-cured products.

Therefore, the process according to the present invention provides a fibre reinforced cement article onto which a translucent coating has been applied on the front surface of a zone which has previously been made water impermeable, and which can be cut and fixed while maintaining its aspect upon exposure to water without requiring an additional treatment.

The products obtained according to the process of the invention are suitable for exterior applications, because (even when coated) they react with CO₂ present in the air (carbonation), thereby enhancing the strength through a higher density due to increased crystallization of cement hydration products. Indeed, during the air-curing step of the process according to the invention, carbonation does nearly not occur because the duration is too short and the fibre reinforced cement articles are superposed between previously oiled metal sheets.

Moreover, a process according to the prior art such as WO02/081399 is expensive in terms of energy requirements, plant investments and is laborious to implement. The process according to the invention allows to obtain products in a more economical way because the process does not need any autoclaving investments in terms of equipment, energy, plant space and facilities and labour.

In WO 02/081399, use is made of aqueous emulsions of water repellent agents. However, such aqueous emulsions decompose due to the alkalinity of the cement matrix; during the suction (or penetration) process demulsification takes place, and as a result of the phase separation water penetrates into the fibre reinforced cement article only, while the water repellent agent remains on the surface and does not penetrate deeply into the fibre reinforced cement article to avoid the appearance of dark zones around untreated cut edges and fixation holes upon exposure to rain; moreover it forms a weak boundary layer, resulting in poor adhesion of subsequently applied coatings. Besides, aqueous emulsions of water repellent agents penetrate less in the fibre cement substrate compared to solvent based water repellents due to their higher surface tension and generally bigger particle size. Also, the aqueous emulsions cause swelling of the cellulose fibres used in the fibre reinforced cement article.

Advantageously, the water repellent composition used in the process according to the present invention is a non aqueous composition providing a more deeply penetration of the water repellent agent and does not impair the adhesion of subsequently applied coatings.In a preferred embodiment of the process according to the invention, the water repellent composition comprises silanes and preferably comprises also siloxanes.

Other embodiments of the process according to the invention are mentioned in the annexed claims.

The invention further relates to the use of a fibre reinforced cement article as building board for interior and exterior wall cladding.

Other uses of the fibre reinforced cement article are mentioned in the annexed claims.

Other characteristics and advantages of the invention will appear more clearly in the light of the following description of a particular non-limiting embodiment of the invention, while referring to non-limiting examples.

By the terms prefinished fibre reinforced cement products and fibre reinforced cement products or articles, it is meant fibre reinforced cement products or articles with a translucent coating on the front surface that can be coated by an additional layer. Both expressions are used to designate the product obtained by the process of the invention.

The fibre reinforced cement products obtained with the process according to the present invention are preferably manufactured according to the Hatschek or Fourdrinier process.

The Hatschek process is particularly preferred. This technique consists in forming a sheet comparable to a paper, by filtration using a fluid aqueous suspension obtained by mixing essentially cement, fibres, water, processing aids and additives, as described for example in EP-B-1047647 and US2005072056. Rotating sieves housed within vats are suspended partially within this slurry. These sieves consist of a drum covered with a filter cloth; since the drum rotates in the vat, the hydrostatic pressure forces some of the water to pass through the filter cloth, whereas the solids, that is to say notably the fibres, the cement particles and other additives, build up on the screen of the drum as a thin layer whose thickness increases with the rotation of the drum. The fibres hold to the sieve, forming an additional screen, the mesh cells of which have a size suitable for retaining the particles, even fine particles, of cement or of other binder or additive, together with an important amount of water which contributes to the cohesion of the thick layer being formed on the screen. The retention on the sieve can be further enhanced by the addition of flocculants. The layer is transferred from the sieve, usually by means of a felt belt and further dewatered by suction through the belt, to a forming roll, on which the material is built up until the desired thickness has been reached.

The Fourdrinier is another layer forming process for the manufacturing of fibre reinforced cement articles, and is explained in Chapter 16 of the Handbook of Pulp & Paper Technologists by G.A. Smook.

The green or uncured sheet is optionally post-compressed to obtain the desired density and is subsequently air-cured.

The fibre reinforced cement products according to the present invention are preferably post-compressed in order to obtain a fibre reinforced cement article characterized by a high density ranging from 1400 to 1900 kg/m³, preferably from 1600 to 1800 kg/m³.

These sheets are possibly but not necessarily autoclaved, generally within 1 week, after air-curing, generally using steam pressures ranging from about 0,7 MPa to 1,3 MPa and temperatures generally in the range of from 160°C to 190°C during preferably about 6 to 24 hours.

The fibre reinforced cement article according to the present invention comprises a front surface comprising a water impermeable zone. This water impermeable zone is obtained by applying a composition comprising a water repellent agent on the front surface of the fibre cement article. Water repellent agents characterized by an average particle size which is lower than the average pore diameter of the fibre reinforced cement article are preferred. The average pore diameter of the fibre reinforced cement article depends on the conditions of post-compression and/or autoclaving steps. Suitable water repellent agents to treat the front surface of the fibre reinforced cement articles comprise silanes. Water repellent agents further comprising siloxanes are particularly preferred. Water repellent agents comprising a blend of alkylalkoxysilane and its corresponding siloxane oligomer are particularly preferred in the case of high density fibre reinforced cement articles, because the small, but rather volatile silane molecules can penetrate into the minor small pores of the fibre reinforced cement product, while the siloxane oligomer molecules can penetrate into the majority of pores characterized by a diameter greater than 200 nm.

Non-aqueous compositions comprising water repellent agents which are used pure or diluted with a polar organic solvent which is compatible with the cement matrix and of relative low molecular weight to assure quick penetration into the cementitious matrix are preferred. Alkylalcohols with 1 to 5 carbon atoms are especially preferred solvents.

Aqueous emulsions comprising water repellent agents are not the most suitable for the water repellent treatment of air-cured fibre reinforced cement products; they do not penetrate so deeply into the cement based matrix with respect to non-aqueous composition because they decompose due to the high alkalinity of the air-cured fibre reinforced cement product. In the case of air-cured compressed fibre reinforced cement articles characterized by a density of at least 1400 kg/m³, good results were obtained with a blend of an alkylalkoxysilane and the corresponding siloxane oligomer with an average particle size of about 200 nm. A solution of this blend in isopropanol, ethanol or butanol at a dilution in the range of 1:1 to 1:4 performed extremely well.

In order to avoid the appearance of dark zones on the edges and around the fixation holes upon exposure of the fibre reinforced cement product to rain or humidity, a water repellent composition has been applied according to the invention forming a water impermeable zone that has a thickness which is at least the thickness of the layer obtained by one revolution of the forming drum in the Hatschek or Fourdrinier process.

According to the invention, a translucent coating composition has been applied on the surface of said water impermeable zone of the fibre reinforced cement articles. Preferably, this translucent coating composition used to manufacture the fibre reinforced cement articles is not obtained by radiation curing or by chemical crosslinking. Suitable coating compositions comprise binders, preferably acrylic binders, obtained by aqueous free radical or ionic emulsion polymerization. Acrylic and/or methacrylic (co)polymers, and their blends are particularly preferred as binders of the compositions forming the translucent coating.

The translucent coating composition comprises surfactants, the amount of which is adjusted in order to reduce its surface tension and hence to assure wetting of the surface of the water impermeable zone of the fibre reinforced cement article upon application of the translucent coating composition. Preferably the minimum film forming temperature of the translucent coating composition is below 60°C.

The solids content of suitable compositions forming the translucent coating is generally in the range from 20 to 60% by weight.

The translucent coating compositions comprise generally as liquid component essentially water and, if desired, an organic liquid miscible with water, for example an alcohol.

The translucent coating composition is further characterized by a pigment volume concentration which is preferably in the range of from 0,01 to 8%. Pigment volume concentrations in the range of 0,05 to 3% are particularly preferred. Typical pigments are metal oxides, such as titanium dioxide, iron oxides, spinell pigments, titanates and other oxides, or organic alkali-resistant pigments such as phtalocyanines and azo compounds.

The translucent coating composition generally comprises, besides the polymeric binders, surfactants and pigments, usual auxiliaries, e.g. viscosity modifiers, dispersants, defoamers, preservatives, biocides, and other usual constituents. Optionally the translucent coating on the front side of the fibre reinforced cement article is covered by subsequently applied transparent and/or translucent coatings, e.g. a coating obtained by radiation and/or chemical curing to improve properties such as mechanical resistance, weathering and graffiti resistance.

According to the present invention, a carbonation reducing sealer has been preferably applied onto the rear surface of the fibre reinforced cement article, in order to reduce the propensity for differential carbonation. If carbon dioxide is not prevented from ingressing via the back side opposing the front surface, the different portions of the fibre reinforced cement article carbonate at different rates and internal stresses develop, manifesting themselves in surface cracking and/or warping of the fibre reinforced cement article. Preferred carbonation reducing sealer applied on the rear surface are polyvinylidenechloride, styrene-butadiene rubber, radiation, thermally, air or chemically curable sealers and their mixtures. Polyvinylidenechloride and styrene-butadiene rubber are particularly preferred carbonation reducing sealers which are applied on the rear surface.

Fibre cement products are manufactured for a variety of uses, including flat panels, slates, building boards for interior and exterior wall cladding and corrugated sheets for roofing and cladding. Preferably, the fibre cement products being the object of the present invention are building boards.

Step (a) of the process according to the present invention is the manufacture the green (uncured) fibre reinforced cement article e.g. according to the Hatschek or Fourdrinier process, as explained above, i.e., from a slurry comprising water, cement and fibres.

The hydraulic-setting composition used for the manufacture of the fibre reinforced cement article according to the present invention optionally comprises pigments. Typical pigments are alkali-resistant metal oxides such as iron, chromium or titanium oxides, and their blends. The concentration of these pigments is usually in the range of from 0,1 to 10 weight % with respect to the initial total weight in the dry state of the hydraulic-setting composition.

Step (b) of the process according to the present invention is the air-curing of the fibre reinforced cement article at a temperature in the range from 45°C to 75°C, preferably at about 60°C during 5, to 10 hours.

Step (c) of the process according to the present invention is the application of a composition comprising a water repellent agent. Preferably, the composition comprising the water repellent composition is applied by roller coating.

After step (c), a storing step is preferably applied according to the process of the present invention. The storage of the fibre reinforced cement article whose front surface has been treated with a composition comprising a water repellent agent during 2 to 6 weeks allows the water repellent agent to penetrate into the fibre reinforced cement article to a depth which is a least the thickness of the layer obtained by one revolution of the forming drum.

Step (d) of the process according to the present invention involves the application of the translucent coating composition. The translucent coating composition is applied at a wet coating weight in the preferred range of from 30 to 500 g/m²; particularly preferred is a wet coating weight in the range of from 70 to 200 g/m². The thickness of the dry translucent coating is preferably in the range of 50-70 µm.

The translucent coating composition is dried at room temperature or preferably at elevated temperature, for example from 40 to 120 °C.

The translucent coating composition is preferably applied by roller coating, spraying or curtain coating. In a particular preferred embodiment of the process according to the present invention, a first layer of the translucent coating composition is applied by roller coating, subsequently followed by a second layer applied by curtain coating. The coating composition of the first layer of the translucent coating can be the same or different from the second layer of the translucent coating composition. Preferably the pigment/volume concentration of the first layer of the translucent coating is lower than the pigment/volume concentration of the second layer of the translucent coating.

Optionally, the process according to the present invention comprises the application of a carbonation reducing sealer on the rear surface of the fibre reinforced cement article. Preferably the carbonation reducing sealer is applied by roller coating, and is applied for example before step e) and after step b), preferably between step c) and step d) or between step d) and e) and more preferably between step c) and d).

### EXAMPLES

### Example 1.-

Green fibre reinforced cement sheet are manufactured according to the Hatschek process, stacked individually between metal templates and then air-cured at 60°C during 7 hours to obtain a density of 1.7 10³kg/m³.

The metal templates are removed and the following process is subsequently applied :
1) application of 73,8 g/m² of a 1:1 solution of SILRES™ BS 1702 (a non-aqueous solution of silane commercialised by Wacker Polymer System) in isopropanol, on the front surface by roller coating at 60°C
2) storage of the boards during at least 3 weeks at room temperature
3) cleaning of front and rear surface by brushing and airblowing
4) preheating up to 75°C
5) roller coating of rear surface with 36-44 g/m² of aqueous dispersion comprising 65 wt % of Diofan™A 602
6) roller coating of the front surface with 64-88 g/m² of a translucent aqueous coating composition comprising about 45 wt% Primal™ SS-521 (commercialised by Rohm and Haas) at 50-60°C
7) drying at 60°C-80°C during about 30-60 seconds
8) curtain coating of the front surface with 100-120 g/m² of a translucent aqueous coating composition comprising about 67 wt% Primal™ SS-521 at 40-45°C
9) intermediate drying with air having a temperature of about 95°C during 30 to 60 seconds
10) tempering for 1 hour at 80°C

The boards were exposed outside during a rainy week with heavy rain, and inspected visually. Dark zones at the edges and around predrilled holes were not observed.

### Example 2.-

Example 1 has been repeated, but using 65g/m² of pure SILRES™ BS 1702, instead of a 1:1 solution of SILRES™ BS 1702. Dark contours at the edges and around predrilled holes were not observed.

### Example 3.-

Example 1 has been repeated, but using 74 g/m² Z-6403 Silane (commercialised by Dow Corning) instead of SILRES™ BS 1702.

Dark contours at the edges and around predrilled holes were almost not observed.

### Comparative Example 1.-

Example 1 has been repeated, but the application of SILRES™ BS 1702 is performed on the sheets before they are stacked between metal templates. Consequently, the sheets have been air-cured during a short time (less than 5 minutes), i.e. the time necessary to convey the sheet to the application station and at room temperature.

The boards showed undeniably dark contours at the edges and around predrilled holes after exposure during a rainy week.

### Comparative Example 2.-

Example 1 has been repeated, but the SILRES™ BS 1702 has been applied on the sheet before being air-cured at 60°C during 7 hours, and subsequently air-cured at room temperature during 27 days.

The boards showed undeniably dark contours at the edges and around predrilled holes after exposure during a rainy week.

## Claims

1. Process for manufacturing fibre reinforced cement articles comprising the steps of :
a) forming a fibre reinforced cement article from a slurry comprising water, cement and fibres,
b) air-curing said fibre reinforced cement article
c) applying a water repellent composition on a front surface of said fibre reinforced cement article,
d) applying a translucent coating composition on said front surface of said fibre reinforced cement article, which is provided with said water repellent composition,
e) film forming and drying the translucent coating composition, **characterized in that** step b) consists of an air-curing of said fibre reinforced cement article at a temperature in the range from 45°C to 75°C during a time period from 5 to 10 hours, and **in that** said step c) is performed on the so obtained air-cured fibre reinforced cement article.

2. Process according to claim 1, wherein the water repellent composition is a non-aqueous composition.

3. Process according to claim 1 or 2, wherein the water repellent composition comprises a water repellent agent comprising silanes.

4. Process according to claim 3, wherein the water repellent agent further comprises siloxanes.

5. Process according to claim 4, wherein siloxanes have an average particle size which is smaller than an average pore diameter of said fibre reinforced cement article.

6. Process according to anyone of the precedent claims, further comprising the application of a carbonation reducing sealer on the rear surface.

7. Process according to claim 6, wherein the carbonation reducing sealer is selected from the group comprising polyvinylidenechloride, styrene-butadiene rubber, radiation, thermally, air or chemically curable sealers and their mixtures.

8. Process according to anyone of the precedent claims, further comprising between step c) and step d) a step of storing said fibre reinforced cement article at room temperature during 2 to 6 weeks.

9. Process according to anyone of the precedent claims, wherein the translucent coating composition is an aqueous dispersion comprising an acrylic binder.

10. Process according to anyone of the precedent claims, wherein said fibre reinforced cement article has a density in the range of from 1400 to 1900 kg/m³.

11. Use of a fibre reinforced cement article obtained by the process as claimed in any one of the claims 1 to 9 as building board for interior and exterior wall cladding.

## Patentansprüche

1. Prozess zum Herstellen von Artikeln aus faserverstärktem Zement, der die folgenden Schritte umfasst:
a) Bilden eines faserverstärkten Zementartikels aus einer Zementmilch, die Wasser, Zement und Fasern umfasst,
b) Lufthärten des faserverstärkten Zementartikels,
c) Aufbringen einer wasserabstoßenden Zusammensetzung auf eine Vorderfläche des faserverstärkten Zementartikels,
d) Aufbringen einer lichtdurchlässigen Beschichtungszusammensetzung auf die Vorderfläche des faserverstärkten Zementartikels, die mit der wasserabstoßenden Zusammensetzung versehen ist,
e) Filmbildung und Trocknen der lichtdurchlässigen Beschichtungszusammensetzung, **dadurch gekennzeichnet, dass** Schritt b) aus einer Lufthärtung des faserverstärkten Zementartikels bei einer Temperatur im Bereich von 45 °C bis 75 °C während einer Dauer von 5 bis 10 Stunden besteht und dass Schritt c) an dem so erhaltenen luftgehärteten faserverstärkten Zementartikel ausgeführt ist.

2. Prozess nach Anspruch 1, wobei die wasserabstoßende Zusammensetzung eine nichtwässrige Zusammensetzung ist.

3. Prozess nach Anspruch 1 oder 2, wobei die wasserabstoßende Zusammensetzung ein wasserabstoßendes Mittel umfasst, welches Silane umfasst.

4. Prozess nach Anspruch 3, wobei das wasserabstoßende Mittel ferner Siloxane umfasst.

5. Prozess nach Anspruch 4, wobei die Siloxane eine durchschnittliche Teilchengröße haben, die kleiner als ein durchschnittlicher Porendurchmesser des faserverstärkten Zementartikels sind.

6. Prozess nach einem der vorherigen Ansprüche, der ferner das Aufbringen eines carbonisationsreduzierenden Einlassgrundes auf die Rückseite umfasst.

7. Prozess nach Anspruch 6, wobei der carbonsationsreduzierende Einlassgrund aus der Gruppe bestehend aus Polyvinylidenchlorid, Styren-Butadien-Gummi, strahlungs-, wärme-, luft- oder chemisch härtbaren Einlassgründen und ihren Mischungen ausgewählt ist.

8. Prozess nach einem der vorherigen Ansprüche, der ferner zwischen Schritt c) und Schritt d) einen Schritt des Lagerns des faserverstärkten Zementartikels bei Raumtemperatur über die Dauer von 2 bis 6 Wochen umfasst.

9. Prozess nach einem der vorherigen Ansprüche, wobei die lichtdurchlässige Beschichtungszusammensetzung eine wässrige Dispersion ist, die ein Acrylbindemittel umfasst.

10. Prozess nach einem der vorherigen Ansprüche, wobei der faserverstärkte Zementartikel eine Dichte im Bereich von 1400 bis 1900 kg/m³ hat.

11. Verwenden eines faserverstärkten Zementartikels, der durch den Prozess gemäß einem der Ansprüche 1 bis 9 erhalten ist, als Bauelement zum Verkleiden von Innen- und Außenwänden.

## Revendications

1. Procédé pour fabriquer des articles en ciment renforcé par des fibres, comprenant les étapes consistant à :
a) former un article en ciment renforcé par des fibres à partir d'une bouillie comprenant de l'eau, du ciment et des fibres,
b) durcir à l'air ledit article en ciment renforcé par des fibres,
c) appliquer une composition hydrofuge sur une surface avant dudit article en ciment renforcé par des fibres,
d) appliquer une composition de revêtement translucide sur ladite surface avant dudit article en ciment renforcé par des fibres, qui est dotée de ladite composition hydrofuge,
e) mettre en film et sécher la composition de revêtement translucide,
**caractérisé en ce que** l'étape b) consiste en un durcissement à l'air dudit article en ciment renforcé par des fibres à une température située dans la plage allant de 45°C à 75°C pendant une période de temps de 5 à 10 heures, et **en ce que** ladite étape c) est mise en oeuvre sur ledit article en ciment renforcé par des fibres durci à l'air ainsi obtenu.

2. Procédé selon la revendication 1, dans lequel la composition hydrofuge est une composition non aqueuse.

3. Procédé selon la revendication 1 ou 2, dans lequel la composition hydrofuge comprend un agent hydrofuge comprenant des silanes.

4. Procédé selon la revendication 3, dans lequel l'agent hydrofuge comprend en outre des siloxanes.

5. Procédé selon la revendication 4, dans lequel les siloxanes ont une granulométrie moyenne inférieure au diamètre de pores moyen dudit article en ciment renforcé par des fibres.

6. Procédé selon l'une quelconque des revendications précédentes, comprenant en outre l'application d'un agent d'étanchéité réduisant la carbonatation sur la surface arrière.

7. Procédé selon la revendication 6, dans lequel l'agent d'étanchéité réduisant la carbonatation est choisi dans le groupe comprenant le poly(chlorure de vinylidène), le caoutchouc de styrène/butadiène, les agents d'étanchéité durcissables par irradiation, à la chaleur, à l'air ou par voie chimique, et leurs mélanges.

8. Procédé selon l'une quelconque des revendications précédentes, comprenant en outre, entre l'étape c) et l'étape d), une étape consistant à stocker ledit article en ciment renforcé par des fibres à la température ambiante pendant 2 à 6 semaines.

9. Procédé selon l'une quelconque des revendications précédentes, dans lequel la composition de revêtement translucide est une dispersion aqueuse comprenant un liant acrylique.

10. Procédé selon l'une quelconque des revendications précédentes, dans lequel ledit article en ciment renforcé par des fibres a une masse volumique située dans la plage allant de 1400 à 1900 kg/m³.

11. Utilisation d'un article en ciment renforcé par des fibres obtenu par le procédé tel que revendiqué dans l'une quelconque des revendications 1 à 9, en tant que panneau de construction pour revêtement mural intérieur et extérieur.
